(19) Europäisches Patentamt
European Patent Office
Office européen des brevets

(11) Publication number: **0 478 617 B1**

(12) # EUROPEAN PATENT SPECIFICATION

(45) Date of publication of patent specification: **28.06.95**

(51) Int. Cl.[6]: **B01F 17/00**, C10M 173/00, C10M 141/08, //C10N40/20, (C10N40/20,C10M173:00, 129:40,129:42,135:10), (C10M141/08,129:40,129:42, 135:10)

(21) Application number: **90909165.4**

(22) Date of filing: **11.06.90**

(86) International application number: **PCT/GB90/00902**

(87) International publication number: **WO 90/15663 (27.12.90 90/29)**

(54) **EMULSIFIER SYSTEMS.**

(30) Priority: **16.06.89 GB 8913945**

(43) Date of publication of application: **08.04.92 Bulletin 92/15**

(45) Publication of the grant of the patent: **28.06.95 Bulletin 95/26**

(84) Designated Contracting States: **AT BE CH DE DK ES FR GB IT LI LU NL SE**

(56) References cited:
**EP-A- 0 206 833**
**FR-A- 1 559 468**
**US-A- 3 507 790**
**US-A- 4 636 326**

(73) Proprietor: **EXXON CHEMICAL PATENTS INC.**
**200 Park Avenue**
**Florham Park**
**New Jersey 07932 (US)**

(72) Inventor: **DE MONTLAUR, George de Villardi**
**6, rue Ballu**
**F-75009 Paris (FR)**
Inventor: **DE CROOCO, Serge**
**Chemin des Gides,**
**Saint Pierre**
**F-13500 Martigues (FR)**
Inventor: **BORDEAUX, Guy Yves Eugène**
**814, rue Abbé-Eliot**
**F-27310 Bourg-Hachard (FR)**
Inventor: **WALLAERT, Bernard Victor Raymond**
**40, rue de la Plaine**
**F-76240 Bonsecours (FR)**

(74) Representative: **Bawden, Peter Charles et al**
**EXXON CHEMICAL LIMITED**
**EXXON CHEMICAL TECHNOLOGY CENTRE**
**PO Box 1**
**Abingdon**
**Oxfordshire OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 478 617 B1

## Description

The present invention relates to emulsifier systems particularly for use in aqueous fluids; especially aqueous cutting fluids and hydraulic fluids, emulsifiable oils suitable for incorporation into water for production of such fluids, additives and additive concentrates including the emulsifier system for incorporation into such fluids and emulsifiable oils.

Emulsified oils are now used in a large number of machining operations due to an industry demand for higher production rates, lower costs, improved environmental conditions and better operator acceptance. Emulsions are generally used where cooling is more important than lubrication. Although neat oils may still be used in operations such as broaching, deep drilling, or where surface finish is particularly critical, the development of extreme pressure additives for emulsions has increased their applicability and use.

The emulsions are generally prepared from emulsifiable oils supplied to the final user for incorporation into the water. The emulsifiable oils frequently contain additives which can be supplied as an additive package, formulation or concentrate to the producer of the emulsifiable cutting oil. The invention relates to emulsifier systems which may form part of the additive package, additive packages, concentrates, emulsifiable oils and water/oil fluids containing the emulsifier system. Amongst the various types of fluids, there is a marked trend towards those having an optimised combination of lubricating, cooling and long-life properties. Such fluids are obtained by micro-emulsification of a base oil frequently formulated with anti-corrosion and biostability agents. The micro-emulsion type of cutting fluid has good stability due to the very small size of their hydrocarbon droplets which do not tend to coalesce during storage. Although this feature is an advantage over conventional fluids forming white emulsion whose hydrocarbon droplet size is much larger, where formulation with water-soluble biostability agents is difficult or emulsifier system is applicable to both types of emulsions.

Aqueous metal working fluids have been known for many years and different additives have been developed to provide oils useful for different types of metal working and for use with different types of water. Many emulsifier systems have been proposed. For example GB-A 1476841 proposes the use of mixtures of the salts of high and low molecular weight sulphonic acids. US-A 4770803 suggests the use of various derivatives of polyisobutenyl succinic acid and anhydrides.

For a long time natural sulfonates have been employed as emulsifiers. They are not expensive materials but, they have disadvantages. Thus they are not very constant in their quality, and hence in their emulsifying properties. In order to improve the emulsifying powers of these known sulfonates it is customary to associate with them secondary surface active agents of different types, more especially non-ionic types or fatty acid salts. But, to achieve consistent results, the amount of these secondary compounds required differ according to the quality of the sulfonate being employed.

Whilst these systems have proved satisfactory in certain instances their effectiveness depends to a large extent on the oil with which they are used and extensive reformulation may be needed when the nature of the oil changes. In addition the products are often used with nitrogen containing additives which is undesirable.

It is also known from, for example, US-A 2999564, 3764593, 3769214 and 4400284, that mixtures of boric acid and alkanolamines, to which fatty acids having from 18 to 22 carbon atoms are optionally added; yield water-soluble metal working fluids; boric acid providing resistance to bacterial formation. However, apart from an insufficient corrosion-inhibiting effect, these fluids have the disadvantage of foaming during use. Also the presence of boron and to a lesser extent nitrogen can lead to environmental problems upon disposal of the used fluid. It has also been proposed in United States Patent 3371047 that salts of the alkanolamines and hydroxy carboxylic acids, such as citric acid, tartaric acid may be used optionally together with boron containing compounds in an oil free metal coating formulation using an excess of acid relative to the alkanol-amine GB-A 1345593 discloses the use of similar salts in oil free systems for metal coating.

US-A 4129509 suggests that the use of metal tartrates and citrates is a convenient way of introducing metal ions into a cutting oil. In this patent the quantity of acid introduced is extremely small.

FR-A-1559468 discloses emulsifiers for oils which can contain polyisobutenyl succinic anhydride, sodium sulphonate and ethoxylated oleic acid

Hydraulic fluids are used in many mechanical operations and are generally oil in water emulsions. Whilst foaming is less critical than in metal working it is important in many uses that these fluids have good bio-stability and, especially in applications such as hydraulic supports for rooves in mines that a stable emulsion can be formed with the water that is naturally available on site which can be very hard containing large amounts of calcium.

We have now found according to the present invention a more flexible and cheaper emulsifier system which may be used to produce nitrogen free water based fluids which can also be used without an antifoam.

The invention therefore provides an emulsifier comprising a mixture of

(i) a salt of a sulphonic acid,

(ii) a salt of a di-carboxylic acid containing from 10-500 carbon atoms together and

(iii) a $C_5$-$C_{25}$ monocarboxylic acid or a salt thereof

The invention also provides additive concentrates for incorporation into emulsifiable oils containing the above emulsifier.

The invention further provides emulsifiable oils containing the above emulsifier.

In a further aspect the invention provides oil/water fluids containing the above emulsifier.

The emulsifier system of the present invention may contain other additives and may be supplied as an aqueous solution for incorporation into oil generally together with other additives to produce the emulsifiable oil of the invention. The emulsifiable oil may then be supplied to the ultimate user who will incorporate the oil into water to produce the aqueous composition of the invention traditionally used in metal working.

Where the fluids of the present invention are aqueous metal working fluids they may be water in oil emulsions or oil in water emulsions, largely depending upon whether lubrication or cooling is the more important. We are, however, particularly concerned with the currently more popular high water content micro emulsion cutting fluids.

The emulsifier system may be supplied as a solution or an emulsion for incorporation into oil or the bulk of the water. The solution may be in oil or water and if in oil it will generally contain some water.

The preferred salts of sulphonic acids used in the emulsifier system are salts of alkylaryl sulfonic acids and of an organic or mineral base. Additional flexibility may be provided in the system by using sulphonic acids whose molecular weights are distributed in accordance with the function C = f (M), where C denotes concentration and M denotes molecular weight of individual acids, which function has two distinct molecular weight maximum $M_1$ and $M_2$, with $M_1 > M_2$ is described in our United Kingdom Patent 1476841.

These sulfonic acid salts may be either inorganic or organic. The preferred inorganic salts are potassium salts since their use reduces gelling problems which can arise with other salts. However, ammonium salts, or those of the other alkali metals, or of the alkaline earth metals are possible. The organic bases which may be employed are nitrogen bases, for example, a primary, secondary or tertiary amine, a polyamine, an alkanolamine etc. The preferred organic bases are monoethanolamine, diethanolamine, triethanolamine.

We prefer that the value of $M_1$ should be at least 270. The value of $M_1$ may be 270 to 360, but is preferably 270 to 400 and is more preferably from 360 to 400. In general, the value of $M_2$ should be from 350 to 700 and is preferably from 450 to 500.

It is preferred that the alkyl groups of the alkylaryl sulfonates are branched-chain alkyl groups since improved emulsion stability is often found in such cases. Accordingly, it is preferred that at least a proportion of the sulphonic acid in the emulsifier composition is made up of branched-chain alkyl type compounds. Preferably a major proportion, and most preferably all, the sulphonic acid is of such compounds. Highly preferred are alkylaryl sulfonates derived from benzene and orthoxylene, especially when the alkyl groups are branched-chain, for examples, when propylene, butene or isobutylene oligomers are used for alkylation.

The high molecular weight carboxylic acid used in the systems of this invention are preferably hydrocarbyl-substituted carboxylic acids and anhydrides made by reacting one or more alpha-beta olefinically unsaturated carboxylic acid or anhydride reagents containing two to about 20 carbon atoms, exclusive of the carboxyl-based groups, with one or more olefins containing at least about 12 carbon atoms, as described more fully hereinafter.

The alpha-beta olefinically unsaturated carboxylic acids and anhydrides may be either monobasic or polybasic in nature.

Exemplary of the monobasic alpha-beta olefinically unsaturated carboxylic acids include the carboxylic acids corresponding to the formula:

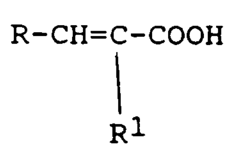

wherein R is hydrogen, or a saturated aliphatic or alicyclic, aryl, alkylaryl or heterocyclic group, preferably hydrogen or a lower alkyl group, and $R^1$ is preferably hydrogen or a lower alkyl group. The total number of carbon atoms. Specific examples of useful monobasic alpha-beta olefinically unsaturated carboxylic acids include acrylic acid; methacrylic acid; cinnamic acid; crotonic acid; 3-phenyl propenoic acid; alpha, beta-decenoic acid, etc. The polybasic acids are preferably dicarboxylic, although tri- and tetracarboxylic acids can be used. Exemplary polybasic acids include maleic acid, fumaric acid, mesaconic acid, itaconic acid and citraconic acid. The alpha-beta olefinically unsaturated carboxylic anhydrides can be the anhydride derivative of any of the foregoing acids. A preferred alpha-beta olefinically unsaturated carboxylic anhydride reagent is maleic anhydride.

In general, the hydrocarbyl substituents present in the hydrocarbyl-substituted carboxylic acids and anhydrides are free from acetylenic unsaturation; ethylenic unsaturation, when present is generally such that there is no more than one ethylenic linkage present for every ten carbon-to-carbon bonds in the substituent. The substituents are often completely saturated and therefore contain no ethylenic unsaturation. These hydrocarbyl substituents have an average of preferably from about 12 to about 500 carbon atoms, more preferably from about 16 to about 500 carbon atoms, more preferably from about 20 to about 500 carbon atoms, more preferably from about 30 to about 500 carbon atoms, more preferably from about 40 to about 500 carbon atoms, more preferably from about 50 to about 500 carbon atoms. These hydrocarbyl substituents are preferably alkyl or alkenyl groups.

These hydrocarbyl substituents are preferably derived from olefin polymers or chlorinated analogs thereof. The olefin monomers from which the olefin polymers are derived are polymerizable olefins and monomers characterized by having one or more ethylenic unsaturated groups. They can be monoolefinic monomers such as ethylene, propylene, butene-1, isobutene and octene-1 or polyolefinic monomers (usually di-olefinic monomers such as butadiene-1, 3 and isoprene). Usually these monomers are terminal olefins, that is, olefins characterized by the presence of the group $>C=CH_2$. However, certain internal olefins can also serve as monomers (these are sometimes referred to as medial olefins). When such medial olefin monomers are used, they normally are employed in combination with terminal olefins to produce olefin polymers which are inter-polymers. Although the hydrocarbyl substituents may also include aromatic groups (especially phenyl groups and lower alkyl and/or lower alkoxy-substituted phenyl groups such as para(tertiary butyl)-phenyl groups) and alicyclic groups such as would be obtained from polymerizable cyclic olefins or alicyclic-substituted polymerizable cyclic olefins. The olefin polymers are usually free from such groups. Nevertheless, olefin polymers derived from such interpolymers of both 1, 3-dienes and styrenes such as butadiene-1, 3 and styrene or para(tertiary butyl) styrene are exceptions to this general rule.

Generally the olefin polymers are homo- or interpolymers of terminal hydrocarbyl olefins of about two to about 16 carbon atoms. A more typical class of olefin polymers is selected from that group consisting of homo- and interpolymers of terminal olefins of about two to about six carbon atoms, especially those of about two to about four carbon atoms.

Specific examples of terminal and medial olefin monomers which can be used to prepare the olefin polymers from which the hydrocarbyl substituents are derived include ethylene, propylene, butene-1, butene-2, isobutene, pentene-1, hexene-1, heptene-1, octene-1, nonene-1, decene-1, pentene-2, propylene tetramer, diisobutylene, isobutylene trimer, butadiene-1, 2, butadiene-1, 3, pentadiene-1, 2, pentadiene-1, 3, isoprene, hexadiene-1, 5, 2-chlorbutadiene-1, 3, 2-methylheptene-1, 3-cyclohexyl-butene-1, 3, 3-dimethylpentene-1, styrene, divinyl-benzene, vinylacetate, allyl alcohol, 1-methyl-vinylacetate, acrylonitrile, ethylacrylate, ethyl-vinylether and methylvinylketone. Of these, the purely hydrocarbyl monomers are preferred and the terminal olefin monomers are especially preferred.

In a particularly advantageous embodiment of the invention, the olefin polymers are poly(isobutene)s such as obtained by polymerization of a $C_4$ refinery stream having a butene content of about 35 to about 75% by weight and an isobutene content of about 30 to about 60% by weight in the presence of a Lewis acid catalyst such as aluminium chloride or boron trifluoride. These polyisobutenes preferably contain predominantly (that is, greater than about 80% of the total repeat units) isobutene repeat units of the configuration.

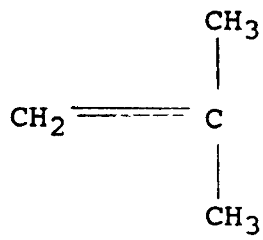

Preferred acids and anhydrides are the hydrocarbyl-substituted succinic acids and anhydrides represented by the formulae:

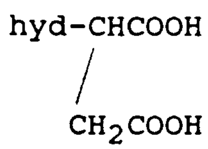

or

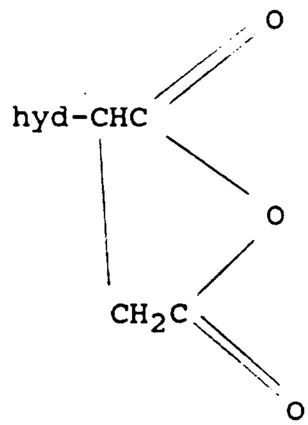

wherein "hyd" is the hydrocarbyl substituent.

Alternatively a hydrocarbyl-substituted olefinically unsaturated anhydride where the hydrocarbyl group is linear branched chain containing 8 to 24 carbon atoms, preferably a C10 to C12 alkenyl succinic anhydride or its corresponding acid may be used. Mixtures of acids may also be used.

The mono carboxylic acids with 5 to 25 carbon atoms preferably contain 10 to 20 carbon atoms and Examples include linear acids, iso acids oxo acids, neo acids and synthetic and naturally occuring fatty acids.

Examples of useful mono-carboxylic acids are neo-decanoic acid, iso undecanoic acid, dodecanoic acid, oleanic $C_9$ and neo-heptanoic acid, n-heptanoic acid, oleic acid, stearic acid, linoleic acid and mixtures thereof.

The relative proportions of the components of the emulsifier system which should be used depends upon the nature of the emulsion to be formed. We prefer however that for every part by weight of sulphonic acid from which the salts are derived the system contain 0.1 to 1 part by weight of the di-carboxylic acid from which the salt is derived and also from 0.1 to 1 part by weight of whichever of the mono-carboxylic acid, non-ionic emulsifier and coupling agent. In this system we prefer that for every part of sulphonic acid there is present

0.3 to 0.6 parts by weight of the dicarboxylic acid

0.25 to 0.45 parts by weight of the mono-carboxylic acid

0.25 to 0.45 parts by weight of the non-ionic emulsifier

0.1 to 0.2 parts by weight of the coupling agent

The emulsifier system of the invention may contain co-emulsifiers to control the hydrophilic/lipophilic balance of the system according to the nature of the oil to be emulsified. When used we prefer to use non ionic co-emulsifiers or a blend of non ionic co-emulsifiers. Examples of suitable non ionic emulsifiers include amine oxides, ethoxylated phenols and C8 to C21 ethoxylated or propoxylated alcohols with 1 to 15 moles of ethylene oxide or propylene oxide or a mixture thereof. Typically decyl, dodecyl, monodecyl alcohols ethoxylated with 3 moles ethylene oxide.

Coupling agents may also be included in the emulsifier system and examples of coupling agent which may be used include non-ionic wetting agents which improve the compatibility of the components, any

desired non-ionic wetting agent may be used, such as a condensation product of ethylene oxide, or propylene oxide; a condensation product of a fatty acid or derivative, such as a derivative of a fatty acid, fatty alcohol, fatty amide or fatty amine, with ethylene oxide; and a reaction product obtained by the condensation of an oxyalkylaryl compound, such as a derivative of an alkylphenol or alkylnaphthol, with ethylene oxide or propylene oxide. It is preferable that the non-ionic wetting agents include the polyethoxyesters of fatty acids, the monooleate of a polyethylene glycol, the monolaurate of a polyethylene glycol, the polyethoxyethers or polypropoxyethers of alcohols, the condensation product of an alkylphenol such as dodecyl phenol with 12 moles of ethylene oxide, and the sulfonated product of the condensation of an alkylphenol or an alkylnaphthol with ethylene oxide.

The emulsifier system of the invention is a mixture of salts formed by neutralising the acids with an organic or inorganic base. We prefer to first make the mixture of the acids and neutralise with the base. When the base is organic it may be an amine or alcanolamine; where it is inorganic base it can be an alkali metal hydroxide or NH4OH. The preferred base is KOH preferred treat rate to avoid the system gelling. The amount of base is preferably such that the pH of the system is in the range of 8.5 to 9 when the product is diluted to 3 vol% in water of hardness 250 ppm calcium carbonate.

We prefer that the emulsifiable cutting oil for incorporation into bulk water contains from 3 to 35 wt%, preferably 3 to 25 wt%, more preferably 7 to 20 wt% of the emulsifier system. The amount of oil incorporated into water depends upon the nature and use of the fluid. Typically micro-emulsions contain from 2% to 10% by weight of oil and the milky emulsions contain from 4% to 10% by weight.

Where the fluids of the present invention are to be used for metal working they may be boron free although small amounts of boron may be required for anti-bacterial properties. Boron may be provided by incorporating boric acid or any other boron compound that forms boric acid upon being dissolved in water, such as metaboric acid or boric oxide. It is preferred to use boron compounds in combination with an amine since it is believed that the boric acid forms an addition product or salt with the amine which is a syrupy liquid and does not precipitate out of the cutting fluid. The emulsifiable oil may contain up to 30 wt% boric acid although we prefer that it contains from 2 to 6 wt% of boric acid to give no more than 1.0, preferably no more than 0.4 wt% boron in the final aqueous metal working fluid.

Where an amine is used in the fluids of this invention we prefer to use alkanolamines especially those which contain from one to three aliphatic radicals, each containing from one to four carbon atoms, and have at least one hydroxy group attached to a carbon atom, and include primary, secondary and tertiary alkylol amines such as mono-, di- or triethanolamine. These amines are generally water-soluble and have no offensive odour. The preferred amine is diethanolamine, which ordinarily contains minor amounts of mono- or triethanolamine, and has no odour.

An aqueous metal working fluid embodying the invention may be used in all metal working operations but gives excellent results in applications in which the pressure per unit of area is relatively low, such as surface grinding operations especially where a number of pieces are being ground simultaneously. For heavy-duty applications, in which the pressure per unit of area is relatively high, an aqueous fluid embodying the invention preferably contains, in addition to the reaction product, antiwear additives such as phosphate esters, sulphurized hydrocarbons and copper passivator such as benzotriazole, tolyltriazole and its derivatives, thiadiazole and dimercapto thiadiazole.

Other ingredients which may be incorporated in the aqueous fluids include anti-foaming agents, biocides, anti-rust additives and extreme pressure additives although when using the systems of our invention it may not be necessary to use anti-foaming agents.

Although the presence of water in the emulsifiable oil is not essential the inclusion of water gives a control of its viscosity which is preferred to be below 500 centistokes at 20 °C for easier handling. When water is present we prefer the formulation contain from 5 to 60 wt% water.

For the production of micro emulsions the emulsifiable oil generally contains 5 to 35, more preferably 5 to 14 wt% oil although larger amounts could be used which may be all the oil required in the final fluid or further oil may be added. Whereas for milky emulsions the emulsifiable oils generally contain from 60 to 90 wt.% oil. Any type of oil may be used, mineral or synthetic and the mineral oils may be paraffinic or naphthenic and it may be necessary to adjust the emulsifier system within the scope of the invention according to the type of oil.

A benefit of using the emulsifier system of the present invention is that as well as emulsifying oils it may be used to emulsify liquids hitherto difficult to emulsify such as chlorinated paraffins and white spirit. For example it has previously been difficult to emulsify more than 20 wt.% of chlorinated paraffins whereas our system has emulsified as much as 40 wt.%.

In the preparation of an emulsifiable oil embodying the invention, the ingredients are mixed at ordinary temperatures to produce a water-miscible fluid. We prefer to first mix the emulsifier system and the oil

together when any other additives and any water that may be needed may also be added at room temperature, with stirring.

The ingredients which form an aqueous fluid embodying the invention may be mixed in any desired order, but it is usually convenient to mix the major ingredients to form a liquid of relatively large bulk with which the minor ingredients may be readily mixed.

The present invention is illustrated by the following examples in which the following emulsifier formulations were used.

| | Emulsifier 1 % | Emulsifier 2 % |
|---|---|---|
| SA 119 | - | 36 |
| SA 149 | 35 | - |
| Pibsa 112 | 15 | 15 |
| Neo $C_{15}$ Acid Bottom | 12.5 | 12.5 |
| EXXAL $C_{12}$ - 3EO | 14 | 14 |
| PnB | 6.5 | 6.5 |
| KOH | 9.3 | 8.8 |
| Water | 7.7 | 7.2 |

| | Emulsifier 3 % | Emulsifier 4 % |
|---|---|---|
| SA 119 | 37.5 | 36 |
| SA 149 | 15.0 | 15.0 |
| Pibsa 112 | 15.0 | 15.0 |
| Iso SA Acid | 11.0 | 11.0 |
| EXXAL 12 - 3EO | 14.0 | 14.0 |
| PnB | 6.0 | 6.0 |
| KOH | 8.6 | 9.4 |
| Water | 7.9 | 8.6 |

Notes:

- Pibsa 112 is a C68 (mean chain length) branched-chain alkenyl succinic anhydride
- PnB is propyleneglycol mono n-Butyl ether used as a coupling agent
- Exxal 12, 3EO is ethoxylated (3EO) dodecanol used as non-ionic emulsifier
- Sulphonic acid 149 is $C_{12}$ alkyl orthoxylene sulphonic acid
- Sulphonic acid 119 is $C_{24}$ alkyl benzene sulphonic acid
- Neo $C_{15}$ acid Bottom is a mixture of neo acids of average carbon number 15.

These emulsifier formulations were used to formulate emulsifiable cutting oils (ECO), hydraulic oils or coolants.

The latter are obtained by blending the emulsifier formulations with a naphthenic, paraffinic or synthetic base oil.

Typical microemulsion formulations comprise 10 to 30 mass% of the emulsifier formulation together with 5 to 40 mass% oil, 0 to 15 mass% coemulsifier (anionic or non ionic), 0 to 5 mass% coupling agent.

The exact choice of the emulsifier system is done according to the hydrophilic or lipophilic character of the basestock to be emulsified.

Other additives which can be added to the formulations include defoamers, rust inhibitors, extreme-pressure agents, lubricating agents, biocides, metal passivators etc. The addition of these may modify the hydrophilic/lipophilic balance of the formulation. This will require a readjustment of the EB treat and ratio.

The following are examples of emulsifiable cutting oil formulations (mass%) containing the emulsifier systems of the present invention - all parts are in wt%.

a) milky emulsions

| Emulsifiable Oil | (1) | (2) | (3) |
|---|---|---|---|
| Emulsifier 1 | 14.0 | 5.4 | 4.5 |
| Emulsifier 2 | - | 14 | 13.5 |
| Shell oil LVI 50 | 86.0 | - | |
| Shell oil HVI 60 | - | 82.0 | - |
| Ninaes oil T 22 | - | 86.0 | |

b) microemulsions

| | 4 | 5 | 6 |
|---|---|---|---|
| Emulsifier 1 | 4.2 | 13.0 | 19.0 |
| Emulsifier 2 | 8.8 | - | |
| The diethanolamine salt of tartaric acid | 46.1 | 45.2 | |
| Tall oil fatty acid | - | 1.5 | |
| Esso Stanco Base 90 | 9.4 | 9.4 | 75.0 |
| Water | 31.5 | 30.9 | 46.0 |
| Boric Acid | | | 4.0 |
| Alkanolamine | | | 3.0 |

Similar formulations using the samne basestocks have been made with Emulsifiers 3 and 4.

All emulsifiable oils have been converted into emulsions by putting 4% of the emulsifiable oil into water. All of them gave stable emulsions after one month.

To check the foaming characteristics and the anti-corrosion performances of the emulsifier systems of the invention, an emulsion containing 4% of the emulsifiable oil 1 plus 2% of the diethanolamine salt of tall oil fatty acids was compared with a similar emulsion based on natural sulfonate (Petronate).

The foam tendency is measured by the Cnomo D-65.5212 test and it was found that when using the formulation of the invention it took 5 hours to reach 1000 mls of foam whilst the other formulation produced 1000 mls in 3 minutes. The 1000 mls of foam declined to 300 mls in 5 minutes whilst the 1000 mls of foam into the natural sulphonate remained stable.

The formulations were also compared in the Paper Corrosion Test IP 287 and the break point with the formulation of the invention was found to be at 2.5 wt.% treat rate whereas with the natural sulphonate it was about 5 wt.%.

**Claims**

**1.** An emulsifier comprising a mixture of
(i) a salt of a sulphonic acid,
(ii) a salt of a di-carboxylic acid containing from 10-500 carbon atoms, and
(iii) a $C_5$-$C_{25}$ monocarboxylic acid or a salt thereof

**2.** An emulsifier according to claim 1 also containing a non-ionic wetting agent.

**3.** An emulsifier according to either of claims 1 or 2 also containing a non-ionic emulsifier.

**4.** An emulsifier according to any of the preceding claims in which the base in all the salts is one or more of an amine, an alkanolamine, alkali metal hydroxide or ammonium hydroxide.

**5.** An emulsifier according to any of the preceding claims containing 0.1 to 1 part of the salt of the dicarboxylic acid from which the salt is derived for each part of the sulphonic acid from which the salt is derived.

**6.** An emulsifier according to any of the preceding claims containing from 0.1 to 1 part by weight of the monocarboxylic acid or salt thereof for each part of the sulphonic acid from which the salt is derived.

7. An emulsifier according to any of the preceding claims containing for every part of sulphonic acid from 0.3 to 0.6 parts by weight of the dicarboxylic acid 0.25 to 0.45 parts by weight of a monocarboxylic acid 0.25 to 0.45 parts by weight of the non-ionic emulsifier 0.1 to 0.2 parts by weight of a coupling agent.

8. An oil solution of an emulsifier of any one of claims 1 to 9.

9. An oil according to claim 8 containing from 3 to 35 wt% of the emulsifier and 97 to 65 wt% oil.

10. An oil according to claim 9 containing up to 60 wt% water.

11. An oil in water emulsion containing the oil of claims 8 to 10.

12. The use of an oil in water emulsion according to claim 11 as a metal working fluid.

## Patentansprüche

1. Emulgator, der eine Mischung aus
   (i) einem Salz einer Sulfonsäure,
   (ii) einem Salz einer Dicarbonsäure mit 10 bis 500 Kohlenstoffatomen und
   (iii) einer $C_5$- bis $C_{25}$-Monocarbonsäure oder deren Salz umfaßt.

2. Emulgator nach Anspruch 1, der außerdem ein nicht-ionisches Benetzungsmittel enthält.

3. Emulgator nach Anspruch 1 oder 2, der außerdem einen nicht-ionischen Emulgator enthält.

4. Emulgator nach einem der vorhergehenden Ansprüche, bei dem die Base in allen Salzen eine oder mehrere aus einem Amin, einem Alkanolamin, Alkalimetallhydroxid oder Ammoniumhydroxid ist.

5. Emulgator nach einem der vorhergehenden Ansprüche, der 0,1 bis 1 Teil des Salzes der Dicarbonsäure, von der das Salz abgeleitet ist, auf jeden Teil der Sulfonsäure, von der das Salz abgeleitet ist, enthält.

6. Emulgator nach einem der vorhergehenden Ansprüche, der 0,1 bis 1 Teil der Monocarbonsäure oder ihres Salzes auf jeden Teil der Sulfonsäure, von der das Salz abgeleitet ist, enthält.

7. Emulgator nach einem der vorhergehenden Ansprüche, der auf jeden Teil Sulfonsäure 0,3 bis 0,6 Gewichtsteile der Dicarbonsäure, 0,25 bis 0,45 Gewichtsteile einer Monocarbonsäure, 0,25 bis 0,45 Gewichtsteile des nicht-ionischen Emulgators und 0,1 bis 0,2 Gewichtsteile eines Kopplungsmittels enthält.

8. Öllösung eines Emulgators nach einem der Ansprüche 1 bis 7.

9. Öl nach Anspruch 8, das 3 bis 35 Gew.% des Emulgators und 97 bis 65 Gew.% Öl enthält.

10. Öl nach Anspruch 9, das bis zu 60 Gew.% Wasser enthält.

11. Öl-in-Wasser-Emulsion, die Öl gemäß den Ansprüchen 8 bis 10 enthält.

12. Verwendung einer Öl-in-Wasser-Emulsion nach Anspruch 11 als Metallbearbeitungsflüssigkeit.

## Revendications

1. Emulsionnant comprenant un mélange
   (i) d'un sel d'un acide sulfonique,
   (ii) d'un sel d'un acide dicarboxylique contenant 10 à 500 atomes de carbone et
   (iii) d'un acide monocarboxylique en $C_5$ à $C_{25}$ ou d'un sel de cet acide.

2. Emulsionnant suivant la revendication 1, contenant aussi un agent mouillant non ionique.

3. Emulsionnant suivant la revendication 1 ou 2, contenant aussi un émulsionnant non ionique.

4. Emulsionnant suivant l'une quelconque des revendications précédentes, dans lequel la base dans tous les sels consiste en un ou plusieurs des composés comprenant une amine, une alcanolamine, un hydroxyde de métal alcalin ou l'hydroxyde d'ammonium.

5. Emulsionnant suivant l'une quelconque des revendications précédentes, contenant 0,1 à 1 partie du sel de l'acide dicarboxylique duquel le sel est dérivé, pour chaque partie d'acide sulfonique duquel le sel est dérivé.

6. Emulsionnant suivant l'une quelconque des revendications précédentes, contenant 0,1 à 1 partie en poids de l'acide monocarboxylique ou de son sel pour chaque partie de l'acide sulfonique duquel le sel est dérivé.

7. Emulsionnant suivant l'une quelconque des revendications précédentes, contenant pour chaque partie d'acide sulfonique 0,3 à 0,6 partie en poids de l'acide dicarboxylique, 0,25 à 0,45 partie en poids d'un acide monocarboxylique, 0,25 à 0,45 partie en poids de l'émulsionnant non ionique, 0,1 à 0,2 partie en poids d'un agent de couplage.

8. Solution dans une huile d'un émulsionnant suivant l'une quelconque des revendications 1 à 9.

9. Huile suivant la revendication 8, contenant 3 à 35 % en poids de l'émulsionnant et 97 à 65 % en poids d'huile.

10. Huile suivant la revendication 9, contenant jusqu'à 60 % en poids d'eau.

11. Emulsionnant huile-dans-eau, contenant l'huile suivant les revendications 8 à 10.

12. Utilisation d'une émulsion huile-dans-eau suivant la revendication 11 comme fluide pour l'usinage de métaux.